(19) Europäisches Patentamt
European Patent Office
Office européen des brevets

(11)  **EP 1 795 699 B1**

(12)  **FASCICULE DE BREVET EUROPEEN**

(45) Date de publication et mention
de la délivrance du brevet:
**22.11.2017   Bulletin 2017/47**

(51) Int Cl.:
***E21B 43/16*** *(2006.01)*     ***E21B 41/00*** *(2006.01)*

(21) Numéro de dépôt: **06291894.1**

(22) Date de dépôt: **07.12.2006**

(54)  **Méthode de détermination des capacitiés de stockage de gaz acides d'un milieu géologique à l'aide d'un modèle de transport réactif multiphasique**

Verfahren zur Bestimmung von Lagerkapazitäten von sauren Gasen in einer geologischen Umgebung mit Hilfe eines Modells für mehrphasigen reaktiven Transport

Method of determining the sour gas storage capacity of a geological medium with the help of a multi-phase reactive transport model

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **12.12.2005   FR 0512714**

(43) Date de publication de la demande:
**13.06.2007   Bulletin 2007/24**

(73) Titulaire: **IFP Energies nouvelles**
**92500 Rueil-Malmaison (FR)**

(72) Inventeurs:
• **Michel, Anthony**
**78150 Le Chesnay (FR)**
• **Trenty, Laurent**
**95170 Deuil-la-Barre (FR)**

(56) Documents cités:
• **WELLMAN, GRIGG, MCPHERSON, LICHTNER: "Evaluation of C02-brine reservoir rock interaction with laboratory flow tests and reactive transport modeling" SOCIETY OF PETROLEUM ENGINEERS, vol. SPE, no. 80228, 5 février 2003 (2003-02-05), - 7 février 2003 (2003-02-07) pages 1-9, XP002398942 Houston**
• **CALABRESE, MASSERANO, BLUNT: "Simulation of physical-chemical processes during carbon dioxide sequestration in geological structures" SOCIETY OF PETROLEUM ENGINEERS, vol. SPE, no. 95820, 9 octobre 2005 (2005-10-09), - 12 octobre 2005 (2005-10-12) pages 1-12, XP002398943 Dallas**
• **PRUESS, XU, APPS, GARCIA: "Numerical modeling of aquifer disposal of C02" SOCIETY OF PETROLEUM ENGINEERS, vol. SPE, no. 83695, 26 février 2001 (2001-02-26), - 28 février 2001 (2001-02-28) pages 49-60, XP002398944 San Antonio**

## Description

La présente invention concerne une méthode pour déterminer les processus hydrodynamiques conduisant au transport de constituants chimiques, ainsi que les processus chimiques intervenant dans un système géochimique.

En particulier, la présente invention permet de déterminer les capacités de stockage de gaz acides ($H_2S$, $CO_2$, $CH_4$) dans un milieu souterrain, par modélisation des processus de transport et de réactions chimiques en milieu poreux.

Toutes les échelles utiles peuvent être concernées : laboratoire, puits, réservoir et étude régionale de bassin.

La méthode peut également trouver des applications directes dans les études de dépollution des sols par des procédés multiphasiques ("venting", utilisation de solvants chlorés).

## Etat de la technique

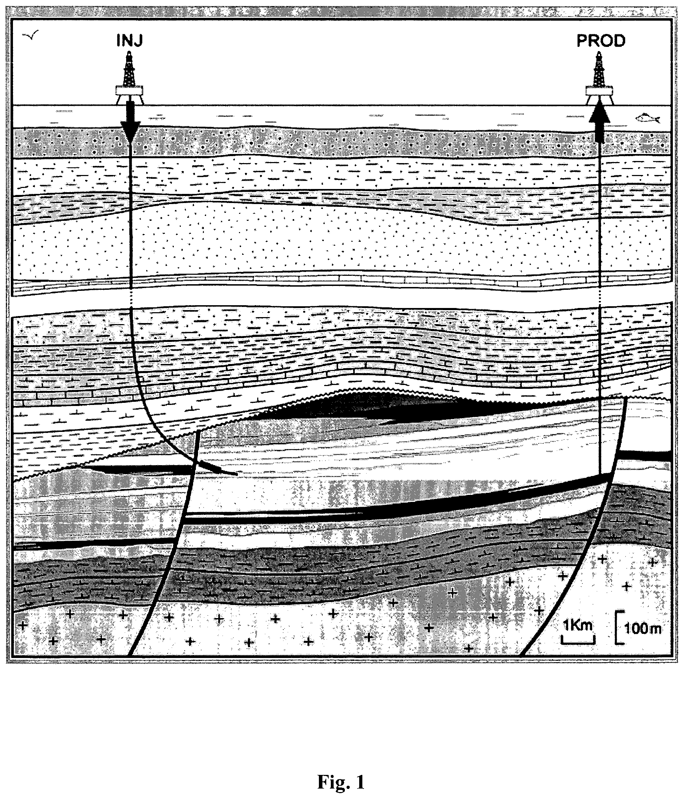

La réduction des émissions de gaz acides tels que le $CO_2$ industriel est devenu un enjeu majeur pour l'environnement, et donc pour de nombreux industriels. Une des solutions pour réduire ces émissions repose sur la séquestration géologique de ces gaz. Le principe consiste à capter le $CO_2$ à son point d'émission (centrale électrique, cimenteries, aciérie ...), à le concentrer et à le transporter vers un site géologique adéquat pour son stockage. Pour cela, des technologies pour capturer et stocker du $CO_2$ sont d'ores et déjà disponibles. Cette filière est largement étudiée depuis quelques années au niveau international, surtout par les industries pétrolières qui y voient un second avantage : la valorisation du stockage géologique du dioxyde de carbone en injectant le $CO_2$ en appui à une opération de récupération assistée de pétrole (EOR ; Enhanced Oil Recovery) ou la récupération assistée du gaz naturel dans les veines de charbon non exploitables (ECBM ; Enhanced Coalbed Methane) et dans les gisements de gaz naturel (EGR ; Enhanced Gas Recovery). Dans ce cadre, l'option envisagée pour le stockage du $CO_2$ est l'utilisation de réservoirs souterrains naturels (réservoirs épuisés de pétrole et de gaz, gisements houillers non exploitables, aquifères salins et cavités salines). Ce type de réalisation est illustrée sur la figure 1, où un puits producteur (PROD) extrait des hydrocarbures du sous-sol, tandis qu'un puits injecteur (INJ) réinjecte du $CO_2$ dans le réservoir.

Le coût associé à la mise en place d'un site de stockage étant important, les enjeux économiques et les impacts environnementaux étant également très importants, il est nécessaire, pour mettre en place de telles méthodes de stockage de gaz acides dans des réservoirs géologiques naturels, de parfaitement déterminer les conditions de stockage sur le long terme. Il s'agît principalement d'étudier la migration du gaz au sein du réservoir et les réactions de précipitation et de dissolution pour déterminer la qualité d'un site de stockage au cours du temps

Une solution technique à ce problème d'évaluation d'un site de stockage à long terme est apportée par les techniques permettant de modéliser des systèmes géochimiques.

Les documents suivants que l'on va citer dans le cours de la description ci-après, illustrent l'état de la technique :

[1] G.T. Yeh and V.S. Tripathi "A Critical Evaluation of Recent Developments in Hydrogeochemical Transport Models of Reactive Multichemical Components", Water Resources Research, Vol. 25. No. 1, 93-108, January 1989.

[2] Y. Le Gallo, O. Bildstein and E. Brosse "Coupled reaction-flow modeling of diagnetic changes in reservoir permeability, porosity and mineral compostion.", Journal of Hydrology 209 (1-4), 366-388, Agust 1998.

[3] J.W. Johnson, J.J. Nitao, C.I. Steefel, K.G. Knauss "Reactive transport modelling of CO2 storage in saline aquifers to elucidate fondamental processes, trapping mechanisms, and sequestration partitioning", GS-London Spec. Pub. ms, August 8, 2002.

[4] Long Nghiem, Peter Sammon, Jim Grabenstetter and Hiroshi Ohkuma, "Modeling CO2 Storage in Aquifers with a Fully-Coupled Geochemical EOS Compositional Simulator", SPE 89474, April 004.

[5] Tianfu Xu and K. Pruess "Modeling multiphase no-isothermal fluid flow and reactive geochemical transport in variably saturated fractured rocks: 1. Methodology", American Journal of Science, Vol. 301, P. 16-33, January 2001.

[6] Hui Cao "Development of techniques for general purpose simulators", PhD Stanford University, June 2002.

[7] Jacob Bear "Dynamics of Fluids in Porous Media", American Elsevier, 1972. Reprinted with corrections, Dover, New York, 1988.

Les trente dernières années ont vu une forte augmentation du nombre de méthodes permettant de modéliser des systèmes géochimiques, qu'ils soient naturels ou provoqués. On appelle système géochimique un milieu poreux, tel qu'un volume de roche, dans lequel circule au moins une phase aqueuse et éventuellement une phase gazeuse. Ces systèmes sont caractérisés par deux types de processus :

- un processus de transport de fluides ;
- un processus de réactions chimiques entre les différents éléments que sont le milieu et les phases aqueuse et gazeuse : roche/eau et eau/gaz par exemple.

Une modélisation précise de ces systèmes géochimiques permet par exemple de déterminer les mécanismes de piégeage des gaz acides dans des formations géologiques. Une telle modélisation permet également de déterminer les conditions de dépollution de sols par des procédés multiphasiques.

Les modèles utilisés doivent être représentatifs du comportement de ces systèmes géochimiques. De tels modèles sont basés sur le principe de conservation de la masse : la masse n'est ni créée ni détruite dans le système, mais transférée entre le solide, la phase aqueuse et la phase gazeuse. Il existe deux types de modèle.

On connaît également les documents :

- Wellman, Grigg, MCPherson, Lichtner, "Evaluation of CO2-brine reservoir rock interaction with laboratory flow tests and reactive transport modeling", SPE, Vol no 80228, (2003-02-05), pages 1-9, XP002398942, Houston : ce document concerne la détermination des capacités d'un milieu géologique à stocker du CO2, et divulgue en particulier la validation d'un modèle de transport réactif à l'aide de mesures expérimentales.
- Calabrese, Masserano, Blunt, "Simulation of physical-chemical processes during carbon dioxide sequestration in geological stracures", SPE, VO1 no 95820, 2005-10-09, pages 1-12, XP002398943, Dallas : ce document concerne la détermination des capacités d'un milieu géologique à stocker du CO2, et divulgue en particulier un modèle prenant en compte l'hétérogénéité du réservoir et la dissolution du CO2 dans la phase aqueuse.
- Les modèles qui ne prennent pas en compte les processus de transport. Ces modèles sont appelés "modèles de réactions chimiques" ou simplement "modèles batch".
- Les modèles qui considèrent à la fois les processus de transport et de réactions chimiques sont appelés "modèle de transport réactif". On parle alors de modélisation couplée.

La définition de tels modèles est complexe et leurs utilisation peut être limitée par les capacités des ordinateurs et/ou le temps de calcul qui croît considérablement en fonction du nombre de constituants à considérer. Les constituants chimiques, comme par exemple $CO_2$, $H_2O$ ou $NaCl$, peuvent être présents soit dans la phase gaz, soit dans la phase eau.

Dans un premier temps, les modèles de systèmes géochimiques ont été utilisés pour comprendre les phénomènes de base liés à la chimie de l'eau ou à l'évolution de processus diagénétiques (cf. [2]). Depuis près de dix ans, les modèles se sont tournés vers l'analyse d'impact environnemental de la pollution des sols, de l'émission de biogaz dans les décharges ou l'étude du stockage de déchets radioactifs (cf. [3] [4]). Enfin depuis peu, leur utilisation s'est étendue à l'étude du stockage géologique de gaz acides ($H_2S$, $CO_2$, $CH_4$).

Un modèle de transport réactif permet de simuler les processus hydrodynamiques conduisant à la migration et à la dispersion de constituants (le transport) associées aux processus géochimiques (les réactions chimiques). Initialement utilisés pour résoudre des systèmes hydrogéologiques (cf. [2]), les modèles de transport réactif sont de plus en plus utilisés pour simuler l'injection, la migration et le stockage de $CO_2$ dans des couches géologiques (cf. [3] [4]). L'introduction d'un constituant initialement présent sous forme gazeuse (le $CO_2$ oblige à considérer des modèles non plus monophasique (uniquement l'eau), mais diphasiques eau - gaz et donc à augmenter le nombre d'inconnues du modèle.

D'un point de vue général, un modèle de transport réactif est une méthode permettant de trouver la solution d'un système d'équations du type :

$$\frac{\partial(\phi.C_i)}{\partial t} = L(c_i) + R(C_i) \qquad (1)$$

où $\Phi$ est la porosité du milieu, $c_i$ la concentration du constituant $i$ dans les phases mobiles (fluides) et $C_i$ la concentration totale (fluides + roche). On a ainsi la relation : $C_i = c_i + \overline{c}_i$, où $\overline{c}i$ est la concentration « immobile » (concentration dans la phase immobile : la roche). $L(c_i)$ définit l'opérateur de transport du constituant $i$ et $R(C_i)$ l'opérateur de réaction chimique.

Le système (1) est difficile à résoudre en raison du nombre important d'inconnues et des fortes non linéarités induites par les termes de réaction. On recense aujourd'hui essentiellement deux approches pour résoudre de tels systèmes :

1. une méthode de résolution séquentielle itérative ;

2. une méthode de résolution simultanée.

Chacune de ces approches peut être résolue de façon explicite ou implicite. On parle de résolution explicite quand on cherche la solution d'un système temporel à $t + dt$ à l'aide de l'état $t$.

La première méthode, la méthode de résolution séquentielle itérative, est la plus couramment utilisée pour résoudre ce type de problème (cf. [2]). Elle consiste à résoudre le système d'équations en deux étapes : une étape de transport sans réaction et une étape de réactions chimiques maille par maille (ceci au court d'un même pas de temps). Yeh et Tripati ont démontré (cf. [1]) qu'il faut ajouter une boucle itérative pour être en mesure de minimiser suffisamment les erreurs numériques sur la conservation de la masse. Cette méthode de résolution séquentielle a été développée et analysée pour des modélisations d'écoulement réactif monophasique eau, 2D ou 3D, en milieu poreux. Elle a été étendue récemment à la modélisation de problèmes multiphasiques par Xu et al. (cf [5]).

La seconde méthode, la méthode de résolution simultanée, résout le système complet en une seule étape. Cette méthode permet de résoudre des systèmes géochimiques complexes et elle est théoriquement très robuste. En pratique, comme l'ont montré Yeh et Tripathi dans un papier de référence (cf. [1]), elle peut devenir rapidement coûteuse en temps CPU et en place mémoire sur des systèmes complexes. Les modèles élaborés à partir de ces approches étaient jusqu'à présent réservés à des écoulements monophasiques eau. Des études récentes comme celle de Nghiem et al. (cf. [4]) montrent qu'on peut maintenant envisager une approche de ce type pour des problèmes multi-phasiques compositionnels en 3D mais avec un nombre restreint de constituants, ce qui n'est pas suffisamment précis pour permettre une application dans le cadre de l'évaluation des capacités de stockage de gaz acides.

La méthode selon l'invention tire parti des avantages des méthodes séquentielles (pas de temps locaux, parallélisation, taille mémoire réduite) tout en évitant d'ajouter une boucle itérative supplémentaire. Elle répond ainsi aux exigences de l'évaluation des capacités de stockage de gaz acides ($H_2S$, $CO_2$, $CH_4$) d'un milieu souterrain, ce dernier représentant un système géochimique multiphasique complexe.

## La méthode selon l'invention

L'invention concerne une méthode pour déterminer les capacités d'un milieu géologique souterrain à stocker au moins un gaz acide, le milieu comprenant une phase solide et une phase aqueuse. La méthode comporte les étapes suivantes :

a) on découpe ledit milieu en un ensemble de sous volumes appelés mailles ;

b) on définit un modèle de transport réactif multiphasique, en couplant un sous modèle de type «réservoir multiphasique compositionnel», dédié à la détermination des taux de transfert liés au gaz, avec un sous modèle de type «transport réactif monophasique», dédié à la détermination des taux de transfert liés à ladite phase aqueuse et à ladite phase solide ;

c) on réalise une acquisition de données pour initialiser ledit modèle de transport réactif multiphasique ;

d) on détermine, pour une période de temps *t* donnée, des processus de transport de constituants chimiques et des processus de réactions chimiques au sein dudit milieu géologique, en résolvant par couplage ledit modèle de transport réactif en toute maille dudit milieu, pour obtenir au moins :

- les quantités de gaz présent dans ledit milieu géologique, ayant migré hors dudit milieu et en surface, ayant précipité, et dissout dans la phase aqueuse ;

- les altérations de la phase solide par précipitation et dissolution.

e) on en déduit les capacités dudit milieu géologique à stocker ledit gaz acide.

Selon l'invention, on peut résoudre ledit modèle de transport réactif sur la période de temps *t*, à l'aide d'un schéma d'évolution en temps, dans lequel on découpe cette période de temps en un nombre fini de pas de temps et en réalisant les étapes suivantes :

a) on définit la durée d'un pas de temps pour synchroniser les deux sous modèles ;

b) on résout le sous modèle «réservoir multiphasique compositionnel» ;

c) on résout le sous modèle «transport réactif monophasique» à l'aide des résultats obtenus à l'étape b) ;

d) on modifie la durée dudit pas de temps et l'on réitère à partir de l'étape b) en tenant compte des résultats obtenus à l'étape c), jusqu'à couvrir ladite période de temps *t* ;

Les taux de transfert liés au gaz peuvent comporter au moins l'un des termes suivants :

- termes sources dudit gaz ;

- termes de changement de phase entre le gaz et la phase aqueuse ;

- termes de flux de gaz au sein dudit milieu.

Les taux de transfert liés à ladite phase aqueuse et à ladite phase solide peuvent comporter au moins l'un des termes suivants :

- termes de réactions de précipitation et de dissolution entre la phase aqueuse et la phase solide ;

- termes de réaction de spéciation au sein de la phase aqueuse ;

- termes de flux de la phase aqueuse au sein dudit milieu ;

- termes source de la phase aqueuse.

Selon l'invention, on peut déterminer à partir dudit modèle de transport réactif multiphasique au moins l'un des phénomènes suivants :

- les déplacements de ladite phase aqueuse et dudit gaz ;

- les échanges de constituants entre la phase aqueuse et le gaz ;

- les échanges de constituants entre la phase aqueuse et la phase solide ;

- les échanges de constituants entre constituants au sein de la phase aqueuse ;

- les échanges de constituants avec l'extérieur dudit milieu.

Selon un mode de réalisation, on peut résoudre le modèle de type «transport réactif monophasique» de manière implicite à partir d'un sous modèle de type réacteur géochimique 0D ouvert en réalisant les étapes suivantes :

- on définit des possibilités d'échanges de constituants entre lesdites mailles, définissant ainsi un graphe de liaison ;

- on détermine un ordre de parcours desdites mailles en analysant ledit graphe de liaison, de façon à parcourir les mailles dans l'ordre des potentiels décroissants ;

- on parcourt chaque maille selon ledit ordre de parcours et on résout ledit modèle de type réacteur géochimique pour chaque maille, à l'aide d'une technique de ligne de courant.

Si l'on ne peut déterminer l'ordre des potentiels décroissants, on peut résoudre ledit modèle de type «transport réactif monophasique» de manière semi-implicite.

D'autres caractéristiques et avantages de la méthode selon l'invention, apparaîtront à la lecture de la description ci-après d'exemples non limitatifs de réalisations, en se référant aux figures annexées et décrites ci-après.

**Présentation succincte des figures**

- La figure 1 montre une représentation schématique d'une opération de stockage géologique de gaz acide.

- La figure 2 décrit de manière schématique le couplage entre un modèle de réservoir compositionnel multiphasique (*RESERVOIR*) et un modèle de transport réactif monophasique *(TREACT).*

- La figure 3 décrit l'implémentation particulière d'un modèle de transport réactif monophasique (*TREACT),* à partir d'un modèle de type géochimique (*GEOCH*) appliqué sur des lignes de courant.

- Les figures 4 et 5 illustrent un cas favorable et un cas défavorable pour appliquer la méthode des lignes de courant.

**Description détaillée de la méthode**

La méthode selon l'invention permet de déterminer les processus hydrodynamiques conduisant au transport des espèces chimiques ainsi que les processus chimiques intervenant dans un système géochimique. La méthode, non itérative, respecte le principe de conservation de la masse de tous les éléments chimiques présents dans le système.

La méthode tire parti des avantages des méthodes séquentielles (pas de temps locaux, parallélisation, taille mémoire réduite) en évitant d'ajouter une boucle itérative supplémentaire. Cette méthode s'appuie sur le couplage de deux sous modèles : un modèle de type transport multiphasique compositionnel non réactif (nommé *RESERVOIR*) et un modèle de transport réactif monophasique dans un champ de vitesses donné (nommé *TREACT*).

La méthode est décrite ci-après dans le cadre de l'évaluation des capacités de stockage de gaz acides d'un milieu poreux tel qu'un réservoir géologique. Selon ce mode de réalisation, la méthode comporte les cinq étapes suivantes :

1) on découpe le milieu poreux en un ensemble de sous volumes appelés mailles et on définit des liaisons entre les mailles ;

2) on établit un système d'équations définissant un modèle de transport réactif multiphasique ;

3) on réalise une acquisition de données pour alimenter le modèle ;

4) on évalue, à partir du modèle de transport réactif multiphasique, les processus hydrodynamiques conduisant au transport des espèces chimiques ainsi que les processus chimiques intervenant dans un système géochimique ;

5) on évalue, à partir du modèle de transport réactif multiphasique, les capacités de stockage de gaz acides du milieu poreux.

1) Maillage du milieu poreux et définition des liaisons

Selon le principe des méthodes numériques aux volumes finis, le domaine physique étudié (le réservoir souterrain) est simplement découpé en volumes élémentaires de manière à ce qu'ils forment une partition du domaine. En pratique, les mailles sont des polygones. C'est ce qu'on appelle un maillage du domaine. Chaque maille possède ses variables (pression, concentrations, porosité, saturation,...) qui représentent des valeurs moyennes des variables physiques que l'on souhaite observer.

Les mailles doivent ensuite être liées entre elles en ajoutant des liaisons entre les mailles. Ces liaisons correspondent aux chemins possibles de la matière dans le réservoir maillé. Les liaisons définissent donc les possibilités d'échanges de matière entre deux mailles : il y a une liaison entre deux mailles si ces deux mailles peuvent échanger de la matière. Ces transferts peuvent se faire d'une maille vers une autre uniquement (liaison orientée), ou entre deux mailles dans un sens ou dans l'autre ; on dit alors que la liaison n'est pas orientée intrinsèquement.

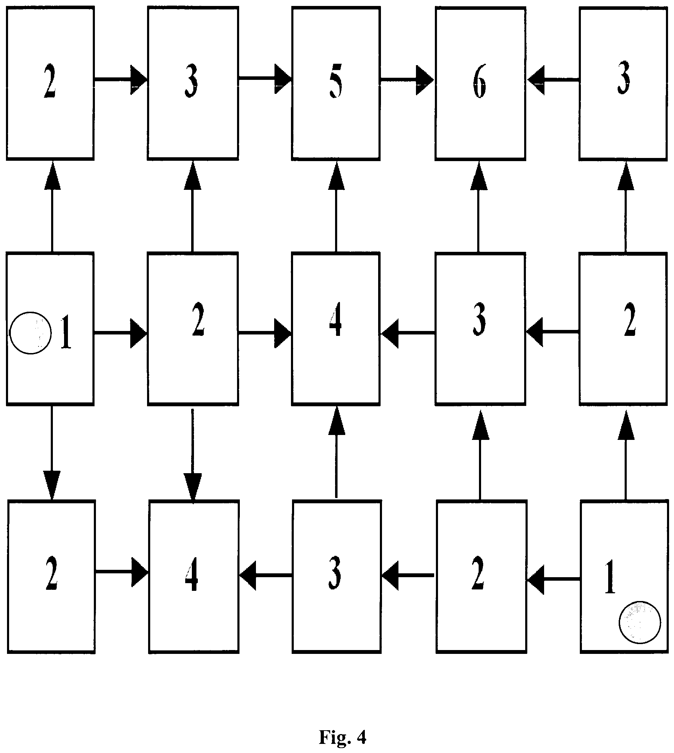

On définit donc à ce stade un graphe de liaison (ensemble des liaisons entre les mailles) non orienté. Si l'on peut ordonner toutes les mailles du graphe de liaison (orienté par les flux d'eau) de telle manière qu'une maille ne soit alimentée que par des mailles précédentes, on parle de graphe de liaison orienté « sans circuit » comme illustré figure 4. Sur cette figure, les mailles sont illustrées par des rectangles, les cercles représentent les points d'injection de gaz, et les numéros représentent les niveaux de chacune des mailles. Ces niveaux sont définis de la façon suivante : une maille ne peut recevoir un flux que d'une maille de niveau inférieur. Ainsi le niveau 1 correspond à des mailles n'ayant que des flux sortant (injection), les mailles de niveaux 2 ne peuvent recevoir des flux que des mailles de niveau 1, .. les mailles de niveau 6 peuvent recevoir des flux de toutes les autres mailles mais aucun flux n'en sort.

2) Définition d'un modèle de transport réactif multiphasique

2.1- Les phénomènes à modéliser

Les phénomènes intervenant dans ce modèle et que l'on souhaite modéliser sont :

*A) Les déplacements de fluides en milieu poreux sous la forme de 2 phases (eau, gaz) :*

Les déplacements des fluides (eau et gaz) sont régis par la loi de Darcy généralisée couplée à un modèle de pression capillaire.

*B) Les échanges de matière entre phases et constituants :*

- Les échanges de constituants entre la phase gazeuse et l'eau

Le gaz et l'eau sont des phases à composition variable, elles peuvent échanger directement des constituants pour vérifier des contraintes d'équilibre thermodynamique physique (changements de phase).

- Les échanges d'éléments entre l'eau et les minéraux

La roche est constituée de plusieurs phases minérales pouvant échanger de la matière avec l'eau par des réactions chimiques de surface : précipitation/dissolution.

- Les échanges d'éléments entre constituants au sein de l'eau

Au sein de l'eau, les constituants peuvent se dissocier ou se combiner afin de vérifier des contraintes d'équilibre thermodynamique chimique (réactions de spéciation, loi d'action des masses).

*C) Les échanges de matière avec l'extérieur du système*

Le système étudié n'est pas un système fermé. De la matière transite du système vers l'extérieur ou inversement par des puits ou des frontières artificielles du système.

### 2.2- Le modèle de transport réactif multiphasiques complet

Le modèle de transport réactif multiphasique complet est basé sur des équations de conservation de la masse pour un grand nombre de constituants dans plusieurs phases. On adopte dans cette description détaillée le point de vue des schémas volumes finis. On écrit les équations de conservation comme un bilan sur un volume élémentaire appelé maille. On fait alors apparaître des termes d'échange sous la forme de flux au travers de liaisons liant les différentes mailles, de termes sources liant une maille à l'extérieur ou de termes de réaction liant les constituants au sein d'un même maille.

Afin de simplifier l'écriture des équations du modèle, on introduit quelques notations :

$|M|$ : volume de la maille $M$ (m³),
$\Phi$ : porosité du milieu,
$\rho_g$ : densité molaire de la phase gaz,
$S_g$ : saturation de la phase gaz,
$Y_i$ : fraction molaire du constituant i dans le gaz,
$\Delta t^n$ : pas de temps entre deux instants $t^n$ et $t^{n+1}$ ($\Delta t^n = t^{n+1} - t^n$),
$F_{g,\sigma}$ : flux d'échange de gaz entre deux mailles,
$F_{g,b}$ : flux d'échange de gaz entre une maille et l'extérieur,
$T_i^{g \to w}$ : transfert de matière d'un constituant i du gaz vers l'eau,
$\rho_w$ : densité molaire de la phase eau,
$S_w$ : saturation de la phase eau,
$W_i$ : fraction molaire du constituant i dans l'eau
$F_{w,\sigma}$ : flux d'échange d'eau entre deux mailles,
$F_{w,b}$ : flux d'échange d'eau entre une maille et l'extérieur,
$T_i^{w \to g}$ : transfert de matière d'un constituant i de eau vers le gaz,
$T_i^{w \to w}$ : transfert de matière d'un constituant i au sein du milieu aqueux,
$T_i^{w \to s}$ : transfert de matière d'un constituant i de l'eau vers le solide,
$C_i$ : concentration du constituant i,
$\rho_m$ : densité molaire du minéral,
$\Phi_m$ : fraction volumique du minéral m,
$T_i^{m \to w}$ : transfert de matière d'un constituant i d'un minéral vers l'eau,

$n_i$ : nombre de mole du constituant i (mol.m$^{-3}$),
$J_{i,\sigma}$ : terme de flux du constituant i (mol.s$^{-1}$),
$Q_{i,b}$ : terme source du constituant i (mol.s$^{-1}$),
$R_i$ : terme de réaction du constituant i (mol.s$^{-1}$).

**Remarque.** Pour un constituant présent en phase gazeuse et en phase aqueuse on définit deux constituants chimiques différents. Le changement de phase peut ainsi s'écrire comme une réaction entre deux constituants du système.

L'équation générale de conservation d'un constituant chimique quelconque intégrée sur un volume de maille $M$ entre deux instants $t^n$ et $t^{n+1}$ peut s'écrire :

$$|M|\left(n_i^{n+1} - n_i^n\right) + \Delta t^n \sum_\sigma J_{i,\sigma} + \Delta t^n \sum_b Q_{i,b} + \Delta t^n R_i = 0 \qquad (2)$$

Les quatre termes de l'équation (2) sont nommés respectivement terme d'accumulation, terme de flux, terme source et terme de réaction.

Pour fermer l'équation (2) pour tous les constituants $i$, il faut spécifier ou éliminer les termes de flux, de bord et de réaction. On peut séparer les constituants en trois catégories: constituants gazeux ($\alpha(i) = g$), constituants dans l'eau ($\alpha(i) = w$) et constituants minéraux ($\alpha(i)=m$). Sous les hypothèses A) B) et C) décrites précédemment, on peut détailler les différents termes de l'équation (2) :

Si $\alpha(i) = g$ :

$$J_{i,\sigma} = \left(\rho_g . Y_i\right)_\sigma . F_{g,\sigma}$$

$$Q_{i,b} = \left(\rho_g . Y_i\right)_b . F_{g,b}$$

$$R_i = T_i^{g \rightarrow w}$$

Si $\alpha(i) = w$ :

$$J_{i,\sigma} = \left(\rho_w . W_i\right)_\sigma . F_{w,\sigma}$$

$$Q_{i,b} = \left(\rho_w . W_i\right)_b . F_{w,b}$$

$$R_i = T_i^{w \rightarrow g} + T_i^{w \rightarrow w} + T_i^{w \rightarrow s}$$

Si $\alpha(i) = m$ :

$$J_{i,\sigma} = 0$$

$$Q_{i,b} = 0$$

$$R_i = T_i^{m \rightarrow w}$$

Les termes $F_{g,\sigma}$, $F_{g,b}$, $F_{w,\sigma}$ et $F_{w,b}$ sont des flux volumiques (m$^3$.s$^{-1}$). Vu d'une maille du système, les frontières (indice $b$) et les liaisons entre mailles (indice $\sigma$) ont donc une représentation tout à fait similaire. Les termes $T_i^{g \to w}$, $T_i^{w \to g}$, $T_i^{w \to w}$, $T_i^{w \to s}$ et $T_i^{m \to w}$ sont des termes de réaction, ils dépendant d'autres constituants que $i$ dans la même maille. On ne distingue pas ici les réactions physiques (changements de phase) et les réactions chimiques. Pour $T_i^{w \to w}$, tous les constituants sont dans la phase eau (réactions homogènes). Pour les autres termes réactifs, les constituants qui interviennent sont dans deux phases (réactions hétérogènes).

### 2.3- Découpage et couplage

Le traitement simultané de tous ces phénomènes entraîne inévitablement la résolution d'un système d'équations de grande taille avec un grand nombre d'inconnues et de sous modèles.

Pour résoudre ce problème, la méthode repose sur l'association de plusieurs sous modèles couplés de manière à obtenir une bonne approximation des phénomènes physicochimiques complets décrits ci dessus.

On réalise, selon l'invention, un découpage simple de ces phénomènes en deux sous modèles. La résolution se fait alors en deux étapes, et chacune d'elles utilise l'opérateur complet dans lequel on remplace certains termes par des termes prédits en fonction des étapes précédentes. On estime que les termes choisis pour ces simplifications et les prédicteurs proposés permettent d'approcher correctement le problème posé dans le cadre du stockage géologique de gaz acide sans itération supplémentaire.

La méthode fournit également le moyen de coupler ces deux sous modèles pour résoudre le problème complet (équation (2)). Cette méthode permet de prendre en compte l'ensemble des phénomènes sans itérations supplémentaires tout en conservant une bonne approximation du phénomène complet. Ce découpage a également pour conséquence de permettre l'utilisation d'une méthode de type lignes de courant qui a de nombreux avantages, expliqués dans la suite.

Le découpage des phénomènes physicochimiques est réalisé selon un principe de « taux de transfert ». Un taux de transfert représente la quantité de matière transférée par unité de temps, d'un point à un autre d'un système géochimique. Ainsi, un taux de transfert correspond soit à « un terme de flux », s'il s'agit d'un transfert entre deux mailles connectées par une liaison, soit à un « terme source », s'il s'agit d'un transfert entre une maille et l'extérieur du réservoir, soit à « un terme de réaction » s'il s'agit d'un transfert entre constituants au sein d'une même maille.

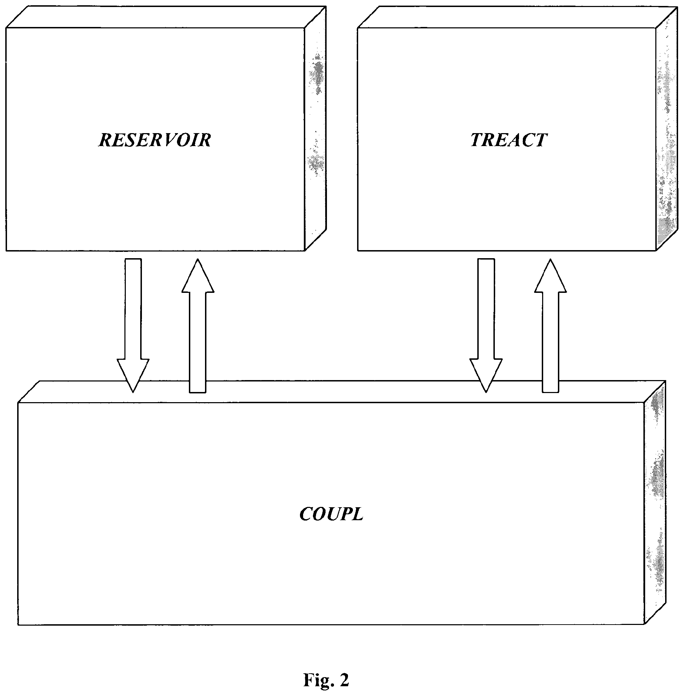

Selon la méthode, les taux de transfert sont découpés en deux parties, comme l'illustre la figure 2 : une partie traitée par un premier sous-modèle de type « réservoir multiphasique compositionnel » (*RESERVOIR*), une autre par un second sous-modèle de type « transport réactif monophasique » *(TREACT)* dans un champs de vitesse donné, les deux sous-modèles étant couplés par un coupleur (*COUPL*).

### Sous-modèle de type « réservoir multiphasique compositionnel » : modèle *RESERVOIR*

Le modèle de type « réservoir multiphasique compositionnel », est appelé *RESERVOIR*. Les taux de transfert traités par ce premier modèle concernent tout les transferts liés au gaz :

1. Termes sources de la phase gazeuse (en entrée (injection) et en sortie (production))

2. Termes de réaction de type changement de phase gaz-eau

3. Termes de flux de gaz au sein du réservoir

Ainsi, pour un volume de maille $|M|$ et un constituant $i$, l'équation de conservation résolue par le schéma numérique s'écrit alors :

Pour le gaz :

$$
\begin{aligned}
&|M| \Phi^{n+1,(1)} \rho_g^{n+1,(1)} S_g^{n+1,(1)} Y_i^{n+1,(1)} - |M| \Phi^{n,(1)} \rho_g^{n,(1)} S_g^{n,(1)} Y_i^{n,(1)} \\
&+ \Delta t^{n,(1)} \sum_\sigma \left( \rho_g Y_i \right)_\sigma^{n+1,(1)} F_{g,\sigma}^{n+1,(1)} \\
&+ \Delta t^{n,(1)} \sum_b \left( \rho_g Y_i \right)_b^{n+1,(1)} F_{g,b}^{n+1,(1)} \\
&+ \Delta t^{n,(1)} T_i^{g \to w, n+1,(1)} \qquad\qquad\qquad = 0
\end{aligned}
\tag{3}
$$

Pour l'eau :

$$\begin{aligned}
&|M|\,\Phi^{n+1,(1)}\rho_w^{n+1,(1)}S_w^{n+1,(1)}W_i^{n+1,(1)} - |M|\,\Phi^{n,(1)}\rho_w^{n,(1)}S_w^{n,(1)}W_i^{n,(1)} \\
&+ \Delta t^{n,(1)}\sum_\sigma \left(\rho_w W_i\right)_\sigma^{n+1,(1)}F_{w,\sigma}^{n+1,(1)} \\
&+ \Delta t^{n,(1)}\sum_b \left(\rho_w W_i\right)_b^{n+1,(1)}F_{w,b}^{n+1,(1)} \\
&+ \Delta t^{n,(1)}T_i^{w\to g,n+1,(1)} \\
&+ \Delta t^{n,(1)}\left(T_i^{w\to w,n,(2)} + T_i^{w\to s,n,(2)}\right) \qquad\qquad = 0
\end{aligned} \qquad (4)$$

Les transferts dans l'eau sont en fait calculés deux fois. Une fois dans le cadre des transferts liés au gaz, en tant que prédiction, et une fois par le sous-modèle de type « transport réactif monophasique » (modèle *TREACT*).

Pour tenir compte des modifications de porosité liées aux réactions chimiques on intègre une correction de volume sous la forme suivante :

$$\Phi^{n+1,(1)} = \Phi^{n,(2)} \qquad (5)$$

Ces trois équations (3), (4) et (5) constituent le modèle de type « réservoir multiphasique compositionnel » (modèle *RESERVOIR*).

*Les entrées de ce modèle RESERVOIR sont les suivantes :*

- Provenant d'un calcul *RESERVOIR* (indicées [1])

  - $\Phi^{n,(1)}$ : porosité à la date $t_n$

  - $S_g^{n,(1)}$, $S_w^{n,(1)}$ : saturations en gaz et en eau à la date $t_n$

  - $Y_i^{n,(1)}$, $W_i^{n,(1)}$ : fractions molaires de constituants dans les phases eau et gaz à la date $t_n$.

  - $\rho_w^{n,(1)}$, $\rho_g^{n,(1)}$ : : densités molaires des phase eau et gaz à la date $t_n$

- Provenant d'un calcul *TREACT* (indicées [2])

  - $\Phi^{n,(2)}$ porosité modifiée déduite à la date $t_n$

  - $T_i^{w\to w,n(2)}$, $T_i^{w\to s,n,(2)}$ : débits réactions chimiques eau-eau et eau-roche à la date $t_n$.

*Les sorties de ce modèle <u>RESERVOIR</u> sont les suivantes* (indicées [1]) :

- Sorties standard

  - $\Delta t^{n,(1)}$ : pas de temps entre $t_n$ et $t_{n+1}$

  - $\Phi^{n+1,(1)}$ : porosité à la date $t_{n+1}$

  - $S_g^{n+1,(1)}$, $S_w^{n+1,(1)}$ : saturations à la date $t_{n+1}$

  - $Y_i^{n+1,(1)}$, $W_i^{n+1,(1)}$ : fractions molaires dans les phases eau et gaz à la date $t_{n+1}$.

  - $\rho_w^{n+1,(1)}$, $\rho_g^{n+1,(1)}$ : densités molaires des phase eau et gaz à la date $t_{n+1}$

- Sorties plus spécifiques

  - $F_{g,\sigma}^{n+1,(1)}$, $F_{w,\sigma}^{n+1,(1)}$ : flux volumiques par liaison phase eau à la date $t_{n+1}$

  - $F_{g,b}^{n+1,(1)}$, $F_{w,b}^{n+1,(1)}$ : flux volumiques par frontière phase eau à la date $t_{n+1}$

  - $T_i^{w\to g,n+1,(1)}$, $T_i^{g\to w,n+1,(1)}$ : taux de transfert réactions eau-gaz à la date $t_{n+1}$

Sous-modèle de type « transport réactif monophasique » : modèle *TREACT*

Ce modèle est appelé *TREACT*. Les taux de transfert traités par le second modèle, modèle de type « transport réactif monophasique », concernent tout les transferts de matière liés à l'eau et à la roche :

   1. Termes de réaction de type précipitation/dissolution entre eau et minéraux

   2. Termes de réaction de type spéciation au sein de la phase eau

   3. Termes de flux d'eau au sein du réservoir

   4. Termes source de la phase eau

   Pour l'eau :

$$
\begin{aligned}
&|M|\,\Phi^{n+1,(1)}S_w^{n+1,(1)}C_i^{n+1,(2)} - |M|\,\Phi^{n,(1)}S_w^{n,(1)}C_i^{n,(2)} \\
&+ \Delta t^{n,(1)}\sum_{\sigma}\left(C_i\right)_{\sigma}^{n+1,(2)}F_{w,\sigma}^{n+1,(1)} \\
&+ \Delta t^{n,(1)}\sum_{b}\left(C_i\right)_{b}^{n+1,(2)}F_{w,b}^{n+1,(1)} \\
&+ \Delta t^{n,(1)}T_i^{w\to g,n+1,(1)} \\
&+ \Delta t^{n,(1)}\left(T_i^{w\to w,n+1,(2)} + T_i^{w\to s,n+1,(2)}\right) \qquad = 0
\end{aligned}
\tag{6}
$$

   Pour la phase minérale :

$$
\begin{aligned}
&|M|\,\Phi_m^{n+1,(2)}\rho_m - |M|\,\Phi_m^{n,(2)}\rho_m \\
&+ \Delta t^{n,(1)}T_i^{m\to w,n+1,(2)} \qquad = 0
\end{aligned}
\tag{7}
$$

   Et l'on ajoute :

$$
\Phi^{n+1,(2)} = 1 - \sum_m \Phi_m^{n+1,(2)}
\tag{8}
$$

Ces trois équations (6), (7) et (8) constituent le modèle de type « transport réactif monophasique » (modèle *TREACT*).

*Les entrées de ce modèle TREACT sont les suivantes :*

• Provenant d'un calcul *RESERVOIR* (indicées $^{(1)}$)

   - $\Delta t^{n,(1)}$ : pas de temps entre $t_n$ et $t_{n+1}$

   - $\Phi^{n,(1)}$, $\Phi^{n+1,(1)}$ : porosités aux *dates* $t_n$ et $t_{n+1}$

   - $S_w^{n,(1)}$, $S_w^{n+1,(1)}$ : saturations d'eau aux dates $t_n$ et $t_{n+1}$

   - $F_{w,\sigma}^{n+1,(1)}$ :   flux volumiques par liaison phase eau à la date $t_{n+1}$

   - $F_{w,b}^{n+1,(1)}$ :   flux volumiques par frontière phase eau à la date $t_{n+1}$

   - $T_i^{w\to g,n+1,(1)}$ : taux de transfert réactions eau-gaz à la date $t_{n+1}$

• Provenant d'un calcul *TREACT* (indicées $^{(2)}$)

   - $C_i^{n,(2)}$ :   concentrations des constituants dans l'eau (molarités) à la date $t_n$

- $\rho_m$ : densité des minéraux

- $\Phi_m^{n,(2)}$ : fraction volumique minéraux à la date $t_n$

*Les sorties de ce modèle TREACT sont les suivantes* (indicées [(2)])*:*

- Sorties standard

  - $C_i^{n+1,(2)}$ : concentrations des constituants dans l'eau (molarités) à la date $t_{n+1}$

  - $\Phi_m^{n+1,(2)}$ : fractions volumiques des minéraux à la date $t_{n+1}$

- Sorties plus spécifiques

  - $T_i^{w\rightarrow w,n+1(2)}$ : taux de transfert réactions eau-eau à la date $t_{n+1}$

  - $T_i^{w\rightarrow s,n+1,(2)}$ : taux de transfert réactions eau-roche à la date $t_{n+1}$

  - $\Phi^{n+1,(2)}$ : porosité modifiée déduite à la date $t_{n+1}$

  - $T_i^{m\rightarrow w,n+1,(2)}$ : détail par minéral des taux de transfert réactions eau-roche à la date $t_{n+1}$

Le modèle de transport réactif multiphasique complet est traité grâce à ces deux sous-modèles, de manière à répartir les phénomènes traités. La connaissance de l'ensemble des termes de transfert, à l'aide de ces deux sous modèles, permet de connaître précisément l'état du système à un instant quelconque $t > 0$, étant donné son état initial à la date $t = 0$. Autrement dit, ces termes de transfert déterminent entièrement l'évolution du système géochimique étudié.

3) Acquisition des données nécessaires au modèle

Les données d'entrée du modèle *RESERVOIR* pour l'initialisation sont obtenues soit par des tests in situ, comme des campagnes sismiques et des tests de puits, ou par des mesures directes sur échantillon (carottes). Ces données sont de trois types :

- caractérisation du milieu poreux (perméabilité, porosité, faciès...)

- caractérisation des fluides (données thermodynamiques des fluides)

- caractérisation croisée (perméabilités relatives)

Les données d'entrée du modèle *TREACT* pour l'initialisation sont des données issues d'expériences de laboratoire et de mesures calorimétriques associées. Les données cinétiques sur les réactions de précipitation/dissolution sont moins bien connues que les données de type thermodynamique elles doivent souvent être ajustées au cas par cas.

4) Évaluation du transport de constituants et des processus chimiques

De façon générale, la méthode selon l'invention permet de déterminer d'une part, les processus hydrodynamiques conduisant au transport des constituants chimiques, et d'autre part, les processus chimiques intervenant dans un système géochimique.

La méthode selon l'invention est basée sur un schéma d'évolution en temps. On utilise un modèle reproduisant l'évolution au cours du temps de phénomènes physiques précis. Comme on ne peut reproduire une période de temps complète en une fois, on la découpe en un nombre fini de sous temps qu'on appelle « pas de temps » (évolution en temps discret). La longueur de ces pas de temps n'est pas constante : la période est découpée en pas de temps discrets dont la taille peut changer au cours de la simulation. Chaque étape fait avancer la simulation d'un pas de temps strictement positif et dans une simulation normale, le temps final ($T_f$) est atteint en un nombre d'étapes inférieur à $\left(T_f - T_0\right)/\Delta_t^{\min}$,

avec $T_0$ le temps initial et $\Delta_t^{\min}$ le pas de temps minimal autorisé. Ce pas minimal est choisi pour limiter le nombre d'étape (une étape par pas de temps), et constitue ainsi un critère d'arrêt.

Une fois l'initialisation de chaque donnée d'entrée des modèles réalisées (par mesures, par des modélisation antérieures, ...), la modélisation des processus de transport et de réactions chimiques au sein du système géochimique, se fait schématiquement en cinq grandes étapes pour chaque pas de temps :

A- Synchronisation des deux sous modèles

B- Résolution du sous modèle RESERVOIR

C- Bilan RESERVOIR et préparation du calcul TREACT

D- Résolution du sous modèle TREACT

E- Bilan TREACT et préparation du calcul RESERVOIR (pas de temps suivant)

**Étape A : synchronisation des sous modèles**

La synchronisation de début de pas de temps consiste à estimer un nouveau pas de temps pour le calcul suivant. Cette étape permet également d'effectuer les opérations nécessaires pour remettre les modèles dans un état leur permettant de refaire les étapes B, C, D, et E.
Si le pas de temps minimal est atteint, on arrête le programme en renvoyant une erreur, la simulation a échoué.

**Étape B : Résolution du sous modèle *RESERVOIR***

Dans cette étape on remplace les termes de réaction chimique (eau-eau et eau-roche) par une prédiction calculée en tenant compte des calculs *TREACT* précédents (au pas de temps précédent).
Le système à résoudre est défini par les équations (3), (4) et (5). A priori, ce problème est de type standard et il peut être résolu par tout sous-modèle de type « transport compositionnel multiphasique non réactif » (cf. [6]).

**Étape C : Bilan du modèle *RESERVOIR* et préparation du calcul *TREACT***

Les données issues de la résolution du sous modèle *RESERVOIR* sont utilisées pour prédire un nombre important de termes qui apparaissent dans le sous-modèle *TREACT*. Il s'agit du flux volumique d'eau sur les liaisons et les frontières et des termes de réaction eau-gaz. On utilise également les volumes d'eau et de gaz prédits par le sous-modèle *RESERVOIR*.

**Étape D : Résolution du sous modèle *TREACT***

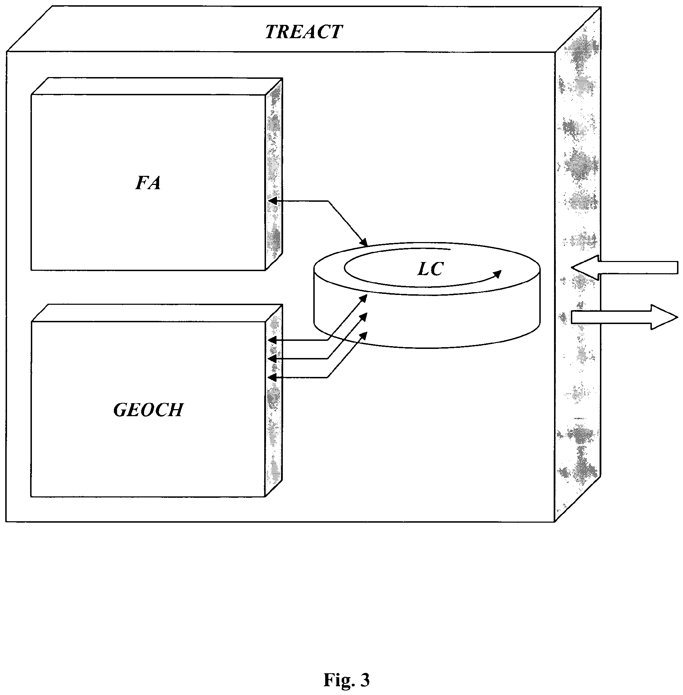

Cette étape s'apparente à une étape d'écoulement réactif avec une seule phase mobile (l'eau) dans un champs de vitesse donné. Pour une maille $M$ et un constituant $i$, l'équation de conservation résolue par le schéma numérique s'écrit selon les équations (6) et (7).
A priori, ce problème est de type standard et il peut être résolu par tout sous-modèle de type « transport réactif monophasique ».
Cependant, selon un mode de réalisation particulier de l'invention on peut définir un sous-modèle de type « transport réactif monophasique » à partir d'un modèle géochimique existant. Une telle résolution du modèle de type « transport réactif monophasique » (*TREACT*) dans un champs de vitesse donné est proposée et illustrée sur la figure 3. Selon ce mode de résolution, on effectue des calculs de géochimie maille par maille à l'aide d'un modèle de type géochimique (*GEOCH*) tout en faisant appel à une analyse du graphe de liaisons (*FA*) pour effectuer ces calculs selon un principe de lignes de courant (*LC*). Ces calculs fournissent les sorties du modèle de type « transport réactif monophasique » (*TREACT*). Plus en détail, le modèle TREACT comporte deux grandes étapes :

- L'analyse de flot (*FA*) qui correspond à la recherche de l'ordre de parcours des mailles sur le graphe orienté. Cette étape prend donc en entrée le graphe orienté par les flux et donne en sortie si oui ou non l'écoulement est de type potentiel, et si l'écoulement est de type potentiel l'ordre à utiliser pour parcourir les mailles.

- La distribution du calcul de chimie (*LC*) : pour chaque maille, on prépare le calcul en récupérant les flux entrants et sortant de cette maille, et on lance le calcul géochimique (GEOCH). On enregistre les résultats. Le modèle GEOCH est appelé autant de fois qu'il y a de mailles, et il travaille sur des données différentes à chaque appel.

Cette méthode a deux avantages : d'une part, il existe de nombreux modèles géochimiques et la méthode peut donc s'appliquer de façon indépendante au choix de celui-ci. D'autre part, ce modèle utilise les propriétés spécifiques du problème : c'est une méthode basée sur une analyse d'un graphe de liaison et une distribution des calculs de géochimie sur des lignes de courant. La méthode est décrite ci dessous.

Le schéma tel qu'il est écrit ci dessus est a priori un schéma implicite, les termes de flux, les termes sources et les termes de réactions font intervenir des variables à la date $t_{n+1}$ qui sont des inconnues du problème. Les méthodes de type implicite sont connues pour être inconditionnellement stables. Ceci peut être prouvé sur des exemples académiques de manière rigoureuse. La pratique a prouvé qu'en effet le fait d'écrire un schéma implicite stabilise le calcul dans de nombreux cas.

La mise en oeuvre d'un schéma implicite demande d'utiliser une méthode itérative pour la résolution d'un systèmes d'équations non linéaires de grande taille. Habituellement cette méthode demande de dériver l'ensemble des termes des équations de conservation par rapport aux variables principales choisies.

L'idée est ici d'utiliser les propriétés du champs de vitesses de l'eau de type « champs dérivant d'un potentiel » pour éviter cette résolution coûteuse. Comme exemple de champs qui dérive d'un potentiel, on peut citer les champs suivants.

-   Le champs électrique $E$ dérive du potentiel électrique $V$. En effet, on peut écrire :

$$E = -grad(V)$$

-   Le champs gravitationnel sur terre $G$ dérive également d'une énergie potentielle $E_p$.

En effet, on peut écrire :

$$G = -grad(E_p)$$

La vitesse de Darcy $V_w$ qui sert à calculer le flux volumique pour les liaisons et les frontières peut s'écrire sous la forme suivante :

$$V_w = \frac{K * k_r}{\mu_w} * \left(grad(P) + \rho_w * G\right)$$

avec :

$V_w$ : vitesse de Darcy de la phase eau
$K$ : perméabilité du milieu poreux
$k_r$ : perméabilité relative
$\mu_w$ : viscosité
$P$ : pression
$\rho_w$ : masse volumique
$G$ : vecteur gravité

Elle n'est pas sous la forme : $V_w = grad(Q)$, où $Q$ serait un potentiel. Cependant, par une transformation usuelle (cf. [7]), lorsque la densité de l'eau est peu variable, on peut écrire

$$V_w = K_H * grad(H)$$

$H$ étant la charge hydraulique et $K_H$ la conductivité hydraulique.

Par conséquent, même si $V_w$ ne dérive pas directement d'un potentiel, sa direction est proportionnelle à $grad(H)$ qui lui dérive d'un potentiel (la charge hydraulique). C'est suffisant pour admettre que le déplacement se fait dans le sens des potentiels de charge hydraulique décroissants. On parlera par la suite d'un écoulement de type potentiel.

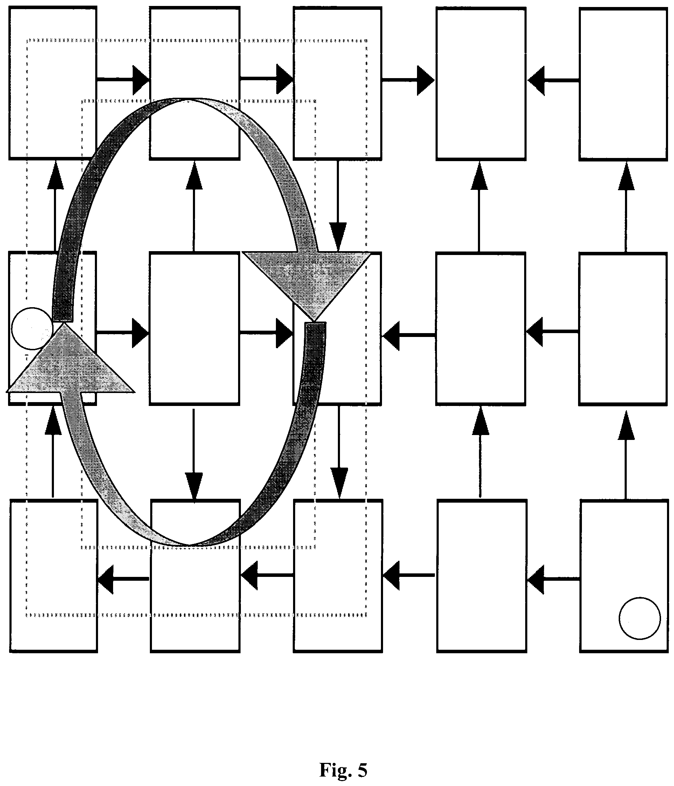

On présume les propriétés de faible variabilité de la densité vérifiées et donc que l'écoulement de l'eau est de type potentiel. En pratique, on propose une implémentation implicite du modèle *TREACT* dans les cas où la propriété suivante est vérifiée : on peut ordonner toutes les mailles du graphe de liaison (orienté par les flux d'eau) de telle manière qu'une maille ne soit alimentée que par des mailles précédentes. Dans la théorie des graphes orientés, on dit que le graphe orienté est « sans circuit » comme illustré figure 4, où les numéros représentent les niveaux de chacune des mailles (rectangle), et les cercles représentent les points d'injection. La figure 5 en revanche, illustre le cas d'un graphe orienté avec circuit. On vérifie a posteriori que cette propriété est vraie mais on ne calcule pas H ni aucun autre potentiel.

Le sens de parcours des mailles est rapidement déterminé et il permet deux choses :

- triangulariser la partie du système (bloc extra-diagonal) qui lie les mailles entre elles. Conséquence : la résolution d'un grand système non linéaire se résume à faire un calcul sur une maille puis à remplacer le résultat dans les équations des autres mailles et ceci pour chaque maille dans l'ordre de parcours déterminé.

- le regroupement de mailles en niveaux permet également de les traiter en parallèle. Les calculs de toutes les réactions ayant lieu sur les mailles d'un même niveau peuvent être faits de manière indépendante donc sur des processeurs ou des machines différentes. En pratique, sur les cas réels, les niveaux sont très importants (une centaine de mailles), on peut donc distribuer au mieux les calculs. C'est le deuxième avantage de cette méthode.

En présence de fortes variations de densité, qui peuvent être occasionnées par une dissolution importante de gaz ou de sels minéraux dans l'eau, et pour conserver un algorithme de distribution de la chimie, on propose d'utiliser uniquement des réactions implicites et des flux explicites. On obtient ainsi un schéma semi-implicite. Les calculs de maille deviennent indépendants et on peut paralléliser l'ensemble du calcul.

**Étape E : Bilan du modèle *TREACT* et préparation du calcul *RESERVOIR***

Les données issues de la résolution du sous modèle *TREACT* sont utilisées pour prédire des termes qui apparaissent dans les équations du modèle *RESERVOIR.* Il s'agit des variations de porosité et des transferts de type réaction chimique eau-eau et eau-roche.

Pour calculer la variation de porosité dans le sous modèle *TREACT,* on effectue une simple différence :

$$\Phi^{n+1,(2)} = 1 - \sum_m \Phi_m^{n+1,(2)} \qquad (9)$$

Pour calculer le bilan des transferts liés aux termes de réaction eau-eau et eau-roche ($T_i^{w,w,n,(2)} + T_i^{w,s,n,(2)}$), on a la même difficulté que lors du calcul des termes de réaction eau-gaz à l'étape C car là aussi on peut supposer que certaines réactions sont instantanées. On procède de la même façon : une fois que les variables au temps $t_{n+1}$ ont été calculées, on utilise l'équation (6) où tous les autres termes sont connus pour en déduire la valeur du terme recherché.

5) Évaluation des capacités de stockage de gaz acides du milieu

Appliquée à un réservoir géologique, la méthode permet de déterminer les capacités de stockage en gaz acides de ce réservoir, comme le $CO_2$ par exemple.

En effet, les phénomènes modélisés sont :

- les déplacement de fluides en milieu poreux sous la forme de 2 phases (eau, gaz)

- les échanges de constituants entre la phases gazeuse et l'eau (changement de phase)

- les échanges de constituants entre l'eau et les minéraux (précipitations, dissolutions)

- les échanges d'éléments entre constituants au sein de l'eau (réactions de spéciation)

- les échanges de matière avec l'extérieur du système (puits, conditions limites)

Ainsi, à l'issue des calculs provenant des différents modèles on connaît les propriétés suivantes :

- $\Delta t^n$ : pas de temps entre $t_n$ et $t_{n+1}$

- $\Phi^{n+1}$ : porosité à la date $t_{n+1}$

- $S_g^{n+1}$, $S_w^{n+1}$ : saturations à la date $t_{n+1}$

- $Y_i^{n+1}$, $W_i^{n+1}$ : fractions molaires dans les phases eau et gaz à la date $t_{n+1}$.

- $\rho_w^{n+1}$, $\rho_g^{n+1}$ : densités molaires des phase eau et gaz à la date $t_{n+1}$

- $F_{g,\sigma}^{n+1}$, $F_{w,\sigma}^{n+1}$ : flux volumiques par liaison phase eau à la date $t_{n+1}$

- $F_{g,b}^{n+1}$, $F_{w,b}^{n+1}$ : flux volumiques par frontière phase eau à la date $t_{n+1}$

- $T_i^{w\to g,n+1}$, $T_i^{g\to w,n+1}$ : taux de transfert réactions eau-gaz à la date $t_{n+1}$

- $C_i^{n+1}$ : concentrations des constituants dans l'eau (molarités) à la date $t_{n+1}$

- $\Phi_m^{n+1}$ : fractions volumiques des minéraux à la date $t_{n+1}$

- $T_i^{w\to w}$, $T_i^{w\to s}$ : taux de transfert réactions eau-eau et eau-roche

- $\Phi^{n+1,(2)}$ porosité modifiée déduite à la date $t_{n+1}$

On peut alors déterminer, pour tout instant *t*, la quantité de gaz présente dans le réservoir, la quantité de gaz qui précipite au cours de la période de temps *t*, la quantité de gaz qui se dissout dans la phase aqueuse au cours de la période de temps *t*, la quantité qui migre au sein du réservoir, la quantité qui migre dans le sous-sol hors du réservoir et la quantité qui migre en surface. On peut également déterminer le niveau d'altérations du réservoir par rapport aux réactions de précipitation et de dissolution.

Le modèle peut alors être utilisé de deux façons :

- Phase d'injection

Lors de la phase d'injection de gaz acides dans le réservoir géologique, la méthode permet de définir une stratégie d'injection et donc d'optimiser le remplissage du réservoir.

Parmi les paramètres ci-dessus, la porosité et les taux de réaction eau roche peuvent, par exemple, permettre de suivre les colmatages au niveau du puits.

- Phase de stockage

Lors de la phase de stockage, la méthode est prédictive. Elle permet d'étudier la stabilité du réservoir au cours du temps et donc d'anticiper les problèmes de fuite (impact sur l'environnement). En effet les réactions de précipitations et de dissolution peuvent altérer la qualité du réservoir sur le long terme. La dégradation de la qualité du réservoir peut alors devenir un frein au stockage voir à un arrêt du stockage. Il est donc très important de déterminer la quantité de gaz qui précipite, la quantité qui migre au sein du réservoir, dans le sous-sol ou à la surface.

La méthode permet en particulier de localiser et déterminer la quantité de $CO_2$ présente dans le réservoir à un instant *t*, sous forme de gaz, dissous dans l'eau ou précipité (carbonates).

Parmi les paramètres ci-dessus, la composition et les volumes des phases (gaz, eau et minéraux) sont particulièrement intéressants pour l'ingénieur.

La méthode peut également trouver des applications directes dans les études de dépollution des sols par des procédés multiphasiques ("venting", utilisation de solvants chlorés).

La méthode selon l'invention permet donc de déterminer les capacités de stockage de gaz acides ($H_2S$, $CO_2$, $CH_4$) dans un milieu souterrain par modélisation des processus de transport et de réactions chimiques en milieu poreux.

Du point de vue de la modélisation, la méthode tire parti des avantages des méthodes séquentielles (pas de temps locaux, parallélisation, taille mémoire réduite) en évitant d'ajouter une boucle itérative supplémentaire. Les avantages sont alors les suivants :

- diminution du temps de calcul total d'une simulation par rapport à une méthode séquentielle itérative en gardant la possibilité d'effectuer des calculs en parallèle maille par maille ;

- approche modulaire permettant de créer un modèle complet à partir de sous modèles *RESERVOIR* et *TREACT* existants plus limités ;

- implémentation facilement parallélisable du modèle *TREACT* basée sur une méthode d'analyse de flot et de distribution de calculs 0D de type géochimique sur des lignes de courant ;

Du point de vue du stockage de gaz acides la méthode fournit un outil indispensable au spécialiste pour modéliser les processus de transport et de réactions chimiques d'un milieu poreux souterrain, en donnant une description précise du comportement dynamique des fluides dans le milieu géologique tout en simulant la plus grande partie des processus chimiques qui interviennent en phase aqueuse.

La méthode effectue un traitement complet du problème compositionel multiphasique représentant un stockage de gaz acide ($CO_2$, $CH_4$, $H_2S$).

## Revendications

1. Méthode pour déterminer les capacités d'un milieu géologique souterrain à stocker au moins un gaz acide, ledit milieu comprenant une phase solide et une phase aqueuse, **caractérisée en ce que** la méthode comporte les étapes suivantes :

   a) on découpe ledit milieu en un ensemble de sous volumes appelés mailles ;
   b) on définit un modèle de transport réactif multiphasique, en couplant un sous modèle de type «réservoir multiphasique compositionnel», dédié à la détermination des taux de transfert liés au gaz, avec un sous modèle de type «transport réactif monophasique», dédié à la détermination des taux de transfert liés à ladite phase aqueuse et à ladite phase solide ;
   c) on réalise une acquisition de données pour initialiser ledit modèle de transport réactif multiphasique ;
   d) on détermine, au moyen d'un ordinateur, pour une période de temps $t$ donnée, des processus de transport de constituants chimiques et des processus de réactions chimiques au sein dudit milieu géologique, en résolvant par couplage ledit modèle de transport réactif en toute maille dudit milieu, pour obtenir au moins :

   - les quantités de gaz présent dans ledit milieu géologique, ayant migré hors dudit milieu et en surface, ayant précipité, et dissout dans la phase aqueuse ;
   - les altérations de la phase solide par précipitation et dissolution.

   e) on en déduit les capacités dudit milieu géologique à stocker ledit gaz acide.

2. Méthode selon la revendication 1, dans laquelle on résout ledit modèle de transport réactif sur ladite période de temps $t$, à l'aide d'un schéma d'évolution en temps, dans lequel on découpe ladite période de temps en un nombre fini de pas de temps et en réalisant les étapes suivantes :

   a) on définit la durée d'un pas de temps pour synchroniser les deux sous modèles ;
   b) on résout ledit sous modèle «réservoir multiphasique compositionnel» ;
   c) on résout ledit sous modèle «transport réactif monophasique» à l'aide des résultats obtenus à l'étape b) ;
   d) on modifie la durée dudit pas de temps et l'on réitère à partir de l'étape b) en tenant compte des résultats obtenus à l'étape c), jusqu'à couvrir ladite période de temps $t$ ;

3. Méthode selon l'une des revendications précédentes, dans laquelle lesdits taux de transfert liés au gaz comportent au moins l'un des termes suivants :

   - termes sources dudit gaz ;
   - termes de changement de phase entre le gaz et la phase aqueuse ;
   - termes de flux de gaz au sein dudit milieu.

4. Méthode selon l'une des revendications précédentes, dans laquelle lesdits taux de transfert liés à ladite phase aqueuse et à ladite phase solide comportent au moins l'un des termes suivants :

   - termes de réactions de précipitation et de dissolution entre la phase aqueuse et la phase solide ;
   - termes de réaction de spéciation au sein de la phase aqueuse ;
   - termes de flux de la phase aqueuse au sein dudit milieu ;
   - termes source de la phase aqueuse.

5. Méthode selon l'une des revendications précédentes, dans laquelle on détermine à partir dudit modèle de transport réactif multiphasique au moins l'un des phénomènes suivants :

- les déplacements de ladite phase aqueuse et dudit gaz ;
- les échanges de constituants entre la phase aqueuse et le gaz ;
- les échanges de constituants entre la phase aqueuse et la phase solide ;
- les échanges de constituants entre constituants au sein de la phase aqueuse ;
- les échanges de constituants avec l'extérieur dudit milieu.

6.  Méthode selon l'une des revendications précédentes, dans laquelle on résout le modèle de type «transport réactif monophasique» de manière implicite à partir d'un sous modèle de type réacteur géochimique 0D ouvert en réalisant les étapes suivantes :

- on définit des possibilités d'échanges de constituants entre lesdites mailles, définissant ainsi un graphe de liaison ;
- on détermine un ordre de parcours desdites mailles en analysant ledit graphe de liaison, de façon à parcourir les mailles dans l'ordre des potentiels décroissants ;
- on parcourt chaque maille selon ledit ordre de parcours et on résout ledit modèle de type réacteur géochimique pour chaque maille, à l'aide d'une technique de ligne de courant.

7.  Méthode selon la revendication 6, dans laquelle on résout ledit modèle de type «transport réactif monophasique» de manière semi-implicite lorsque l'on ne peut déterminer l'ordre des potentiels décroissants.


**Patentansprüche**

1.  Verfahren zur Bestimmung der Fähigkeiten eines unterirdischen geologischen Mediums, mindestens ein saures Gas zu speichern, wobei das Medium eine feste Phase und eine wässrige Phase umfasst, **dadurch gekennzeichnet, dass** das Verfahren die folgenden Schritte umfasst:

a) Schneiden des Mediums in eine Gesamtheit von Untervolumina, Maschen genannt;
b) Definition eines mehrphasigen reaktiven Transportmodells, wobei ein Untermodell vom Typ "kompositorisches mehrphasiges Reservoir", das für die Bestimmung der mit dem Gas verbundenen Transferraten bestimmt ist, mit einem Untermodell vom Typ "mehrphasiger reaktiver Transport", das für die Bestimmung der Transferraten, die mit der wässrigen Phase und der festen Phase verbunden sind, bestimmt ist, gekoppelt werden;
c) Durchführung einer Datenerfassung, um das mehrphasige reaktive Transportmodell zu initialisieren;
d) Bestimmung mit Hilfe eines Computers für eine gegebenen Zeitdauer t der Transportvorgänge von chemischen Bestandteilen und der Vorgänge von chemischen Reaktionen innerhalb des geologischen Mediums, wobei durch Kopplung das reaktive Transportmodell an jeder Masche des Mediums gelöst wird, um mindestens zu erhalten:

- die in dem geologischen Medium vorhandenen Gasmengen, die aus dem Medium und an die Oberfläche migriert sind, ausgefällt und in der wässrigen Phase aufgelöst wurden;
- die Veränderungen der festen Phase durch Ausfällung und Auflösung,

e) daraus Ableiten der Fähigkeiten des geologischen Mediums, das saure Gas zu speichern.

2.  Verfahren nach Anspruch 1, bei dem das reaktive Transportmodell über den Zeitraum t mit Hilfe eines Zeitentwicklungsschemas gelöst wird, bei dem die Zeitdauer in eine endliche Anzahl von Zeiteinheiten geschnitten wird, und die folgenden Schritte durchgeführt werden:

a) Definition der Dauer einer Zeiteinheit, um die zwei Untermodelle zu synchronisieren;
b) Lösen des Untermodells "kompositorisches mehrphasiges Reservoir";
c) Lösen des Untermodells "mehrphasiger reaktiver Transport" mit Hilfe der in Schritt b) erhaltenen Ergebnisse;
d) Veränderung der Dauer der Zeiteinheit und deren Reiteration ab dem Schritt b), wobei in Schritt c) erhaltene Ergebnisse berücksichtigt werden, bis der Zeitraum t abgedeckt ist.

3.  Verfahren nach einem der vorhergehenden Ansprüche, bei dem die mit dem Gas verbundenen Transferraten mindestens einen der folgenden Terme umfassen:

- Quellterme des Gases;
- Phasenänderungstherme zwischen dem Gas und der wässrigen Phase;
- Gasstromterme innerhalb des Mediums.

**4.** Verfahren nach einem der vorhergehenden Ansprüche, bei dem die mit der wässrigen Phase und der festen Phase verbundenen Transferraten mindestens einen der Terme umfassen:

- Reaktionsterme einer Ausfällung und Auflösung zwischen der wässrigen Phase und der festen Phase;
- Reaktionsterme einer Speziation innerhalb der wässrigen Phase;
- Strömungsterme der wässrigen Phase innerhalb des Mediums;
- Quellterme der wässrigen Phase.

**5.** Verfahren nach einem der vorhergehenden Ansprüche, bei dem auf Basis des mehrphasigen reaktiven Transportmodells mindestens eines der folgenden Phänomene bestimmt wird:

- die Verschiebungen der wässrigen Phase und des Gases;
- die Austausche von Bestandteilen zwischen der wässrigen Phase und dem Gas;
- die Austausche von Bestandteilen zwischen der wässrigen Phase und der festen Phase;
- die Austausche von Bestandteilen zwischen Bestandteilen innerhalb der wässrigen Phase;
- die Austausche von Bestandteilen mit dem Äußeren des Mediums.

**6.** Verfahren nach einem der vorhergehenden Ansprüche, bei dem das Modell vom Typ "mehrphasiger reaktiver Transport" implizit auf Basis eines Untermodells vom Typ offener geochemischer Reaktor OD gelöst wird, wobei die folgenden Schritte durchgeführt werden:

- Definition der Möglichkeiten von Austauschen von Bestandteilen zwischen den Maschen, wodurch ein Verbindungsgraph definiert wird;
- Bestimmung einer Reihenfolge des Durchlaufens der Maschen, wobei der Verbindungsgraph analysiert wird, um die Maschen in der Reihenfolge der abnehmenden Potenziale zu durchlaufen;
- Durchlaufen jeder Masche gemäß der Durchlaufreihenfolge und Lösen des Modells vom Typ geochemischer Reaktor für jede Masche mit Hilfe einer Stromlinientechnik.

**7.** Verfahren nach Anspruch 6, bei dem das Modell vom Typ "einphasiger reaktiver Transport" halb-implizit gelöst wird, wenn die Reihenfolge der abnehmenden Potenziale nicht bestimmt werden kann.

**Claims**

**1.** A method for determining the capacities of an underground geologic medium to store at least one acid gas, said medium comprising a solid phase and an aqueous phase, **characterized in that** the method comprises the following stages:

a) dividing said medium into a set of sub-volumes referred to as cells,
b) defining a multiphase reactive transport model by coupling a sub-model of "compositional multiphase reservoir" type, dedicated to determination of the transfer rates related to the gas, with a sub-model of "single-phase reactive transport" type, dedicated to determination of the transfer rates related to said aqueous phase and said solid phase,
c) carrying out data acquisition so as to initialize said multiphase reactive transport model,
d) determining, using a computer, for a given time period $t$, chemical constituent transport processes and chemical reaction processes within said geologic medium, by solving by coupling said reactive transport model in any cell of said medium, so as to obtain at least:

- the amounts of gas present in said geologic medium, that have migrated outside said medium and to the surface, precipitated and dissolved in the aqueous phase,
- the solid phase alterations through precipitation and dissolution,

e) deducing therefrom the capacities of said geologic medium to store said acid gas.

**2.** A method as claimed in claim 1, wherein said reactive transport model is solved over said time period $t$ by means of a time-dependent evolution scheme wherein said time period is divided into a finite number of time intervals and by carrying out the following stages:

a) defining the duration of a time interval to synchronize the two sub-models,
b) solving said "compositional multiphase reservoir" sub-model,
c) solving said "single-phase reactive transport" sub-model by means of the results obtained in stage b),
d) changing the duration of said time interval and repeating the procedure from stage b) by taking account of the results obtained in stage c) until said time period $t$ is covered.

**3.** A method as claimed in any one of the previous claims, wherein said transfer rates related to the gas comprise at least one of the following terms:

- source terms of said gas,
- terms of phase change between the gas and the aqueous phase,
- terms of gas flow within said medium.

**4.** A method as claimed in any one of the previous claims, wherein said transfer rates related to said aqueous phase and said solid phase comprise at least one of the following terms:

- terms of precipitation and dissolution reactions between the aqueous phase and the solid phase,
- terms of speciation reaction within the aqueous phase,
- terms of aqueous phase flow within said medium,
- source terms of the aqueous phase.

**5.** A method as claimed in any one of the previous claims, wherein at least one of the following phenomena is determined from said multiphase reactive transport model:

- the displacements of said aqueous phase and of said gas,
- the constituent exchanges between the aqueous phase and the gas,
- the constituent exchanges between the aqueous phase and the solid phase,
- the constituent exchanges between constituents within the aqueous phase,
- the constituent exchanges with the outside of said medium.

**6.** A method as claimed in any one of the previous claims, wherein the "single-phase reactive transport" type model is solved implicitly from a sub-model of open 0D geochemical reactor type by carrying out the following stages:

- defining constituent exchange possibilities between said cells, thus defining a connection graph,
- determining a sweep order for said cells by analyzing said connection graph so as to sweep the cells in decreasing potential order,
- sweeping each cell according to said sweep order and solving said geochemical reactor type model for each cell, by means of a streamline technique.

**7.** A method as claimed in claim 6, wherein said "single-phase reactive transport" type model is solved in a semi-implicit manner when the decreasing potential order cannot be determined.

**Fig. 1**

Fig. 2

**Fig. 3**

Fig. 4

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **G.T. YEH ; V.S. TRIPATH.** A Critical Evaluation of Recent Developments in Hydrogeochemical Transport Models of Reactive Multichemical Components. *Water Resources Research,* Janvier 1989, vol. 25 (1), 93-108
- **Y. LE GALLO ; O. BILDSTEIN ; E. BROSSE.** Coupled reaction-flow modeling of diagnetic changes in reservoir permeability, porosity and mineral composition. *Journal of Hydrology,* Août 1998, vol. 209 (1-4), 366-388
- **J.W. JOHNSON ; J.J. NITAO ; C.I. STEEFEL ; K.G. KNAUSS.** Reactive transport modelling of CO2 storage in saline aquifers to elucidate fondamental processes, trapping mechanisms, and sequestration partitioning. *GS-London Spec. Pub. ms,* 08 Août 2002
- **LONG NGHIEM ; PETER SAMMON ; JIM GRABENSTETTER ; HIROSHI OHKUMA.** Modeling CO2 Storage in Aquifers with a Fully-Coupled Geochemical EOS Compositional Simulator. *SPE 89474*
- **TIANFU XU ; K. PRUESS.** Modeling multiphase no-isothermal fluid flow and reactive geochemical transport in variably saturated fractured rocks: 1. Methodology. *American Journal of Science,* Janvier 2001, vol. 301, 16-33
- Development of techniques for general purpose simulators. **HUI CAO.** PhD Stanford University. Juin 2002
- **JACOB BEAR.** Dynamics of Fluids in Porous Media. American Elsevier, 1972
- **WELLMAN, GRIGG ; MCPHERSON, LICHTNER.** Evaluation of CO2-brine reservoir rock interaction with laboratory flow tests and reactive transport modeling. *SPE,* 1-9
- **CALABRESE ; MASSERANO ; BLUNT.** Simulation of physical-chemical processes during carbon dioxide sequestration in geological stracures. *SPE,* 1-12